# EUROPEAN PATENT APPLICATION

(11) **EP 3 698 910 A1**
(43) Date of publication of application: **26.08.2020**
(21) Application number: 20158845.6
(22) Date of filing: 21.02.2020
(51) Int. Cl.: B23K 9/095, G06F 3/0346

(54) **SYSTEMS AND APPARATUS FOR INTERACTING WITH A COMPUTER DURING A WELDING OPERATION**

(30) Priority: 21.02.2019 US 201916281279
(71) Applicant: Lincoln Global, Inc., Santa Fe Springs, CA 90670 (US)
(72) Inventor: CROSS, Charles, Euclid, OH Ohio 44132 (US)
(74) Representative: Grosse Schumacher Knauer von Hirschhausen

(57) **Abstract**

Embodiments of systems (100), methods, and apparatus for interacting with a computer (300) during a welding operation are provided. In one embodiment, a welding tool (400) is provided. The welding tool (400) includes a handle (410), a neck (430), and an air mouse device (450) having a selection interface. The welding tool (400) is configured to be operatively connected to a welding machine (200) and used by an operator to perform a welding operation on a workpiece. Also, the air mouse device (450) is configured to wirelessly communicate with a computer (300) operatively connected to the welding machine (200). The air mouse device (450) allows the operator to position a computer cursor over an option icon (325), as displayed on a display monitor (320) by the computer (300), by moving the welding tool (400) in the air. Furthermore, the air mouse device (450) allows the operator to select the option icon by engaging the selection interface of the air mouse device (450).

## Description

The invention is related to a welding tool according to claim 1, and to a welding system according to claims 3 and 8. U.S. Patent No. 4,787,051 issued on November 22, 1988, U.S. Patent No. 9,547,379 B2 issued on January 17, 2017, and U.S. Patent No. 9,766,721 B2 issued on September 19, 2017 are each incorporated herein by reference in their entirety, providing details of inertial mouse technology and air mouse technology. U.S. Published Patent Application No. 2010/0320184 A1 published on December 23, 2010 is incorporated herein by reference it its entirety, providing details of a welding tool in the form of a welding gun. U.S. Patent No. 10,137,522 B2 issued on November 27, 2018 and U.S. Patent No. 10,144,080 B2 issued on December 4, 2018 are each incorporated herein by reference in their entirety, providing details of cutting systems and cutting tools (torches).

### FIELD OF THE INVENTION

Embodiments of the present invention relate to systems, methods, and apparatus related to welding (or cutting), and more specifically to systems, methods, and apparatus for interacting with a computer during a welding operation (or a thermal cutting operation). Embodiments are described herein with respect to welding. However, the inventive concepts described herein may be equally applicable to thermal cutting. For example, inventive concepts described herein may apply equally well to thermal cutting tools as well as to welding tools, and thermal cutting machines as well as to welding machines.

### TECHNICAL BACKGROUND

As intelligent welding becomes more relevant, paperless documentation and record keeping become more relevant in the production environment. The ability for a welding operator to readily interact with paperless systems (e.g., computers) during a welding operation, while staying at the welding machine and without losing focus in the work area, has been lacking. Since labor and overhead are costly portions of welding operations, the less a welding operator has to walk around or leave the work cell, the more that can be saved and the safer the welding operator will be (e.g., no tripping over cables while walking between a computer and a welding machine).

### DESCRIPTION

In order to make welding more efficient and more safe for the welder, a welding tool according to claim 1 is described and a welding system according to claims 3 and 8. Preferred embodiments are subject of the subclaims. Embodiments of the present invention include systems, methods, and apparatus related to welding, and more specifically to systems, methods, and apparatus allowing a welding operator to easily interact with paperless systems during a welding operation in an efficient manner.

In one embodiment, a welding tool is provided. The welding tool includes a handle, a neck, and an air mouse device having a selection interface. The welding tool is configured to be operatively connected to a welding machine and used by an operator to perform a welding operation on a workpiece. Also, the air mouse device is configured to wirelessly communicate with a computer operatively connected to the welding machine. In one embodiment, the computer may be built into (is an integral part of) the welding machine. The air mouse device allows the operator to position a computer cursor over an option icon, as displayed on a display monitor by the computer, by moving the welding tool in the air. Furthermore, the air mouse device allows the operator to select the option icon by engaging the selection interface of the air mouse device. In one embodiment, the air mouse device in an integral part of the welding tool. In another embodiment, the air mouse device is configured to be attachable to and detachable from at least one of the handle or the neck of the welding tool. In one embodiment, the air mouse device is configured as an inertially-based air mouse device. In another embodiment, the air mouse device is configured as an optically-based air mouse device. In general, the air mouse device will be located near the display monitor. In one embodiment, the welding tool is an arc welding tool further including a trigger assembly, a nozzle, a conductive assembly, and a contact tip.

In one embodiment, a welding system is provided in a local configuration. The welding system includes a welding machine configured to provide a welding output power during a welding operation. The welding system also includes a computer operatively connected to the welding machine to communicate with the welding machine, where the computer is configured to execute a welding software program. The welding system further includes a display monitor operatively connected to the computer and configured to display a screen generated by the welding software program when executed by the computer. The welding system also includes a welding tool operatively connected to the welding machine and configured to be used by an operator to perform the welding operation on a workpiece. The welding tool has an air mouse device configured to wirelessly communicate with the computer to allow the operator to position a computer cursor, displayed on the display monitor by the computer, by moving the welding tool in the air. The air mouse device is configured to allow the operator to position the computer cursor over option icons, displayed as part of the screen on the display monitor, and select the option icons. When operating welding software or when producing a variety of different parts in manufacturing, numerous files and folders containing work instructions, weld procedures, and/or blueprints may be accessed. The operator may desire to access email, access a manufacturing execution system (MES), or write a brief report. The computer may have a virtual keyboard allowing the operator to type information using the air mouse device. In one embodiment, the air mouse device in an integral part of the welding tool. In another embodiment, the air mouse device is configured to be attachable to and detachable from the welding tool. In one embodiment, the air mouse device is configured as an inertially-based air mouse device. In another embodiment, the air mouse device is configured as an optically-based air mouse device. In one embodiment, the welding machine includes a user interface, and the computer is configured to receive commands from the welding machine, in response to a user using the interface, to turn the air mouse device on or off. In one embodiment, the welding software program is a management software program configured to allow the operator to control the welding machine using the air mouse device. In one embodiment, the welding software program is a work instructions software program configured to guide the operator through the welding operation. In one embodiment, the welding software program allows the operator to access at least one of work instructions, blueprints, or welding procedure specifications via the computer using the air mouse device.

In one embodiment, a welding system is provided in a networked configuration. The welding system includes a welding machine configured to provide a welding output power during a welding operation. The welding system also includes a computer operatively connected to the welding machine to communicate with the welding machine, where the computer is configured to access an external computer network via a browser software application running on the computer. The welding system further includes a display monitor operatively connected to the computer and configured to display a browser screen generated by the browser software application when executed by the computer. The welding system also includes a welding tool operatively connected to the welding machine and configured to be used by an operator to perform the welding operation on a workpiece. The welding tool has an air mouse device configured to wirelessly communicate with the computer to allow the operator to position a computer cursor, displayed on the display monitor by the computer, by moving the welding tool in the air. Furthermore, the air mouse device is configured to allow the operator to manipulate the browser screen to access information from the external computer network by positioning the computer cursor over first option icons, displayed as part of the browser screen on the display monitor, and select the first option icons. In one embodiment, the display monitor is configured to display a web page accessed by the computer as the information from the external computer network, and the air mouse device is configured to allow the operator to position the computer cursor over second option icons, displayed as part of the web page on the display monitor, and select the second option icons. In one embodiment, the air mouse device in an integral part of the welding tool. In another embodiment, the air mouse device is configured to be attachable to and detachable from the welding tool. In one embodiment, the air mouse device is configured as an inertially-based air mouse device. In another embodiment, the air mouse device is configured as an optically-based air mouse device. In one embodiment, the information accessible from the external computer network includes at least one of welding work instructions, welding blueprints, welding procedure specifications, or a software application. In one embodiment, the software application includes at least one of a welding software application, a commercially available computer-aided design (CAD) software application, a commercially available spreadsheet software application, or a commercially available presentation software application configured to execute on the external computer network (e.g., on a server computer "in the cloud").

Numerous aspects of the general inventive concepts will become readily apparent from the following detailed description of exemplary embodiments, from the claims, and from the accompanying drawings.

### BRIEF DESCRIPTION OF THE DRAWINGS

The accompanying drawings, which are incorporated in and constitute a part of the specification, illustrate various embodiments of the disclosure. It will be appreciated that the illustrated element boundaries (e.g., boxes, groups of boxes, or other shapes) in the figures represent one embodiment of boundaries. In some embodiments, one element may be designed as multiple elements or that multiple elements may be designed as one element. In some embodiments, an element shown as an internal component of another element may be implemented as an external component and vice versa. Furthermore, elements may not be drawn to scale.
FIG. 1 illustrates one embodiment of a local configuration of a welding system;
FIG. 2 illustrates a schematic block diagram of one example embodiment of a welding machine of the welding system of FIG. 1;
FIG. 3 illustrates one example embodiment of a computer of the welding system of FIG. 1;
FIG. 4 illustrates a first example embodiment of a welding tool of the welding system of FIG. 1 having an integrated air mouse device;
FIG. 5 illustrates a second example embodiment of a welding tool of the welding system of FIG. 1 having an attachable/detachable air mouse device;
FIG. 6 is a flowchart of one embodiment of a method to interact with a computer during a welding operation using the welding system of FIG. 1;
FIG. 7 illustrates one embodiment of a networked system architecture having a plurality of welding systems each configured to access an external computer network; and
FIG. 8 illustrates one embodiment of a networked system architecture having a welding system configured to interact with the Internet-of-Things (IoT).

### DETAILED DESCRIPTION

As intelligent welding becomes more relevant, paperless documentation and record keeping become more relevant in the production environment. Embodiments of the present invention provide for computers and welding machines to communicate with other computers giving work instructions, blueprints, and welding procedure specifications in a paperless format. Having an air mouse built into or attached to a welding tool (e.g., a welding gun or welding torch) removes additional equipment in a welding environment and speeds up the production/learning process. This makes is easier for an operator to access files and software programs, and give commands on the computer to the welding machine. The operator does not have to leave their work cell, increasing potential operator factor.

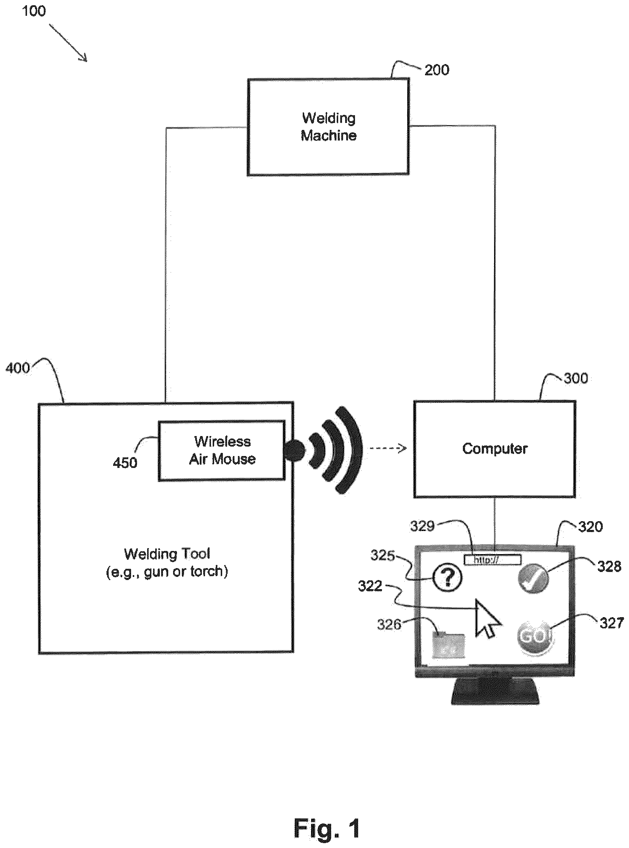

The examples and figures herein are illustrative only and are not meant to limit the subject invention, which is measured by the scope and spirit of the claims. Referring now to the drawings, wherein the showings are for the purpose of illustrating exemplary embodiments of the subject invention only and not for the purpose of limiting same, FIG. 1 illustrates one embodiment of a local configuration of a welding system 100. The welding system 100 includes a welding machine 200, a computer 300, a display monitor 320, and a welding tool (e.g., a welding gun or torch) 400. In one embodiment, the display monitor may be integrated into the computer and/or the computer may be integrated into the welding machine.

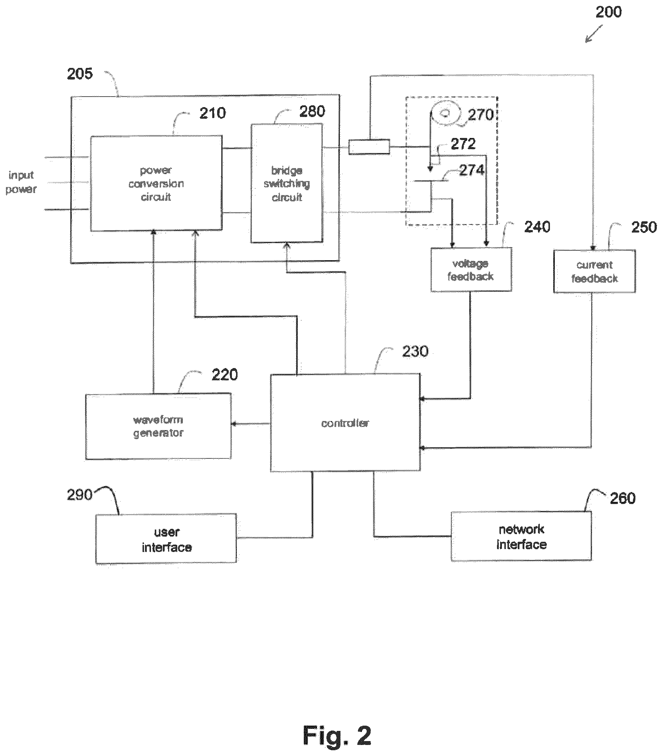

The welding machine 200 is configured to provide a welding output power (e.g., in the form of a welding voltage and a welding current) during a welding operation (e.g., an arc welding operation). An exemplary embodiment of the welding machine 200 is discussed herein with respect to FIG. 2. The computer 300 may be, for example, a desktop PC, a laptop, or a tablet and is operatively connected to the welding machine 200 to communicate with the welding machine. The computer 300 is configured to execute a welding software program and/or a browser software application. The welding system 100 also includes a display monitor 320 operatively connected to the computer 300 (or is a part of the computer 300) and configured to display a screen generated by the welding software program or the browser software application when executed by the computer 300. The welding system 100 further includes a welding tool 400 operatively connected to the welding machine 200 (e.g., via welding cables) and configured to be used by the human operator to perform the welding operation on a workpiece.

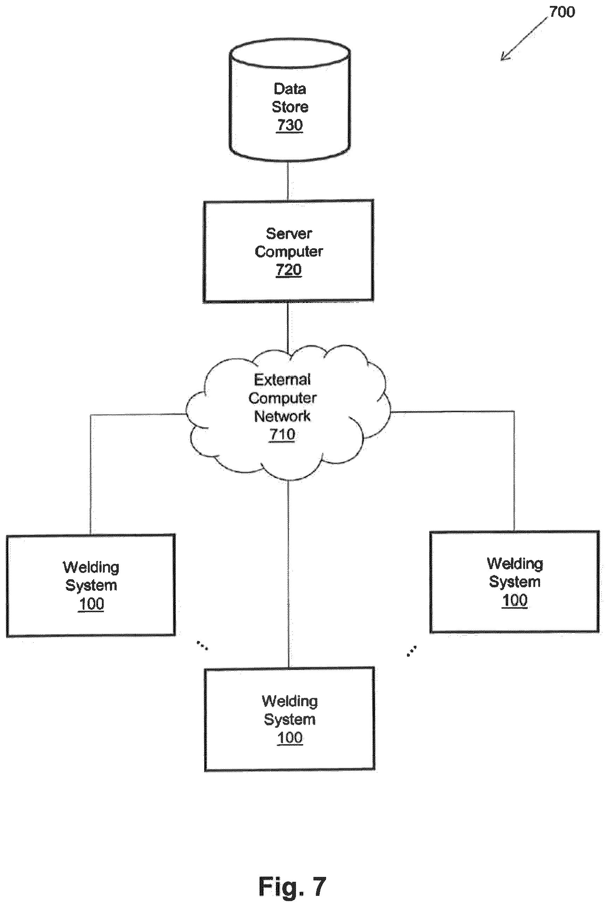

The welding tool 400 has an air mouse device 450 configured to wirelessly communicate with the computer 300 (e.g., to transmit motion-related data to the computer 300) to allow the operator to position a computer cursor 322, displayed on the display monitor 320 by the computer 300, by moving the welding tool 400 in the air. In this manner, the operator can position the computer cursor 322 over option icons (e.g., the option icons 325-329), displayed as part of the screen on the display monitor 320, and select an option icon. Each option icon may correspond to a different feature, function, or window provided by the welding software program or browser software application executing on the computer 300. For example, the option icon 325 may allow the operator to ask a question. The option icon 326 may allow the operator to access a computer folder containing computer files. The option icon 327 may allow the operator to initiate a welding sequence to be performed on a workpiece. The option icon 328 may allow the operator to indicate to the welding system 100 when a particular welding task of the welding sequence has been completed by the operator. In the case of a browser software application displaying a browser screen where the option icon 329 is a window (e.g., provided by the browser software application running on the computer 300), the window 329 allows the operator to type in text (e.g., corresponding to a Uniform Resource Locator (URL) or search criteria), for example, to go to Web sites or search for Web sites on an external computer network (e.g., the Internet). Accessing an external computer network is discussed later herein with respect to FIG. 7. Other option icons are possible as well, in accordance with other embodiments. In general, selection of an option icon results in the computer 300 initiating at least one function associated with the option icon (e.g., opening a computer folder, opening a computer file, initiating execution of a computer program, providing a virtual keyboard, or any number of other operator selectable computer or software related functions).

In one embodiment, the welding software program may be, for example, a management software program configured to allow a human operator to control the welding machine 200 using the wireless air mouse device 450 which is part of the welding tool 400. The welding tool 400, having a wireless air mouse device 450, is discussed in more detail later herein. In another embodiment, the welding software program may be, for example, a work instructions software program configured to guide the operator through the welding operation (e.g., a sequence of welds on a workpiece) using the wireless air mouse device 450 which is part of the welding tool 400. In yet another embodiment, the welding software program may allow the operator to access work instructions, blueprints, or welding procedure specifications via the computer 300 using the wireless air mouse device 450 which is part of the welding tool 400. Other types of welding software programs are possible as well, in accordance with other embodiments.

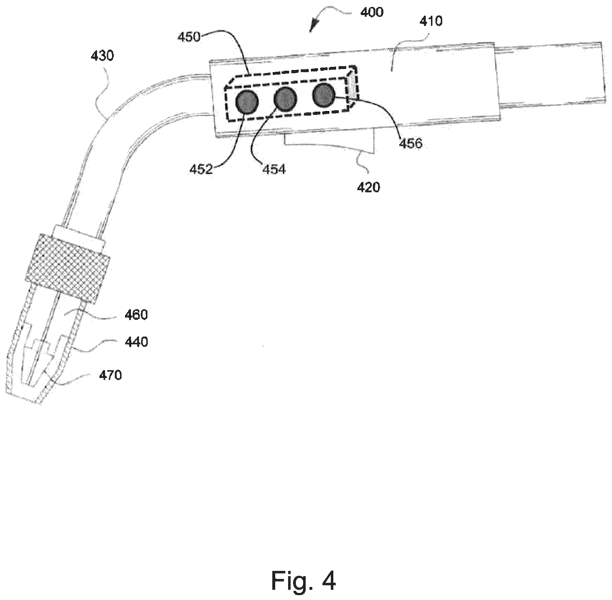

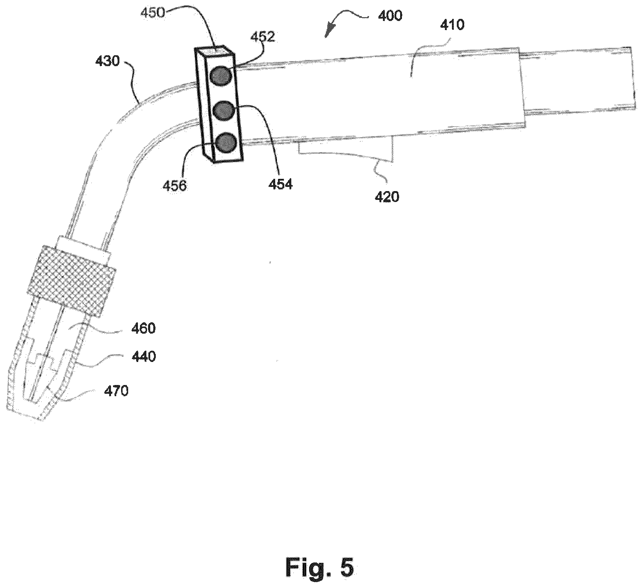

In one embodiment, the air mouse device 450 is an integral part of the welding tool 400, as discussed later herein with respect to FIG. 4. In another embodiment, the air mouse device 450 is configured to be attached to and detachable from the welding tool 400, as discussed later herein with respect to FIG. 5. In one embodiment, the air mouse device 450 is configured as an inertially-based air mouse device. In another embodiment, the air mouse device 450 is configured as an optically-based air mouse device. Other types of air mouse devices may be possible as well, in accordance with other embodiments. Details of various types of air mouse device technologies are described in U.S. Patent No. 4,787,051, U.S. Patent No. 9,547,379 B2, and U.S. Patent No. 9,766,721 B2 which are each incorporated herein by reference in their entirety.

FIG. 2 illustrates a schematic block diagram of one example embodiment of a welding machine 200 of the welding system 100 of FIG. 1 operatively connected to a consumable wire electrode 272 (e.g., via the welding tool 400). The welding machine 200 includes a switching power supply 205 having a power conversion circuit 210 and a bridge switching circuit 280 providing welding output power between the wire 272 and a workpiece part 274 to melt the wire 272 during welding by forming an arc between the wire 272 and the part 274. The power conversion circuit 210 may be transformer based with a half bridge output topology. For example, the power conversion circuit 210 may be of an inverter type that includes an input power side and an output power side, for example, as delineated by the primary and secondary sides, respectively, of a welding transformer. Other types of power conversion circuits are possible as well such as, for example, a chopper type having a DC output topology. The welding machine 200 also includes a bridge switching circuit 280 that is operatively connected to the power conversion circuit 210 and is configured to switch a direction of the polarity of the welding output current (e.g., for AC operation).

The welding machine 200 further includes a waveform generator 220 and a controller 230. The waveform generator 220 generates welding waveforms at the command of the controller 230. A waveform generated by the waveform generator 220 modulates the output of the power conversion circuit 210 to produce the output current between the wire 272 and the workpiece part 274. The controller 230 also commands the switching of the bridge switching circuit 280 and may provide control commands to the power conversion circuit 210.

In one embodiment, the welding machine 200 further includes a voltage feedback circuit 240 and a current feedback circuit 250 to monitor the welding output voltage and current between the wire 272 and the workpiece part 274 and provide the monitored voltage and current back to the controller 230. The feedback voltage and current may be used by the controller 230 to make decisions with respect to modifying the welding waveform generated by the waveform generator 220 and/or to make other decisions that affect operation of the welding machine 200, for example.

In accordance with one embodiment, the switching power supply 205, the waveform generator 220, the controller 230, the voltage feedback circuit 240, the current feedback circuit 250, and the network interface 260 constitute a welding power source. The welding machine 200 may also include a wire feeder 270 that feeds the consumable metal wire 272 toward the workpiece part 274 through the welding tool 400 (not shown in FIG. 2) at a selected wire feed speed (WFS), in accordance with one embodiment. The wire feeder 270, the consumable metal wire 272, and the workpiece part 274 are not part of the welding power source but may be operatively connected to the power source via one or more output cables, for example.

In accordance with one embodiment, the controller 230 measures, calculates, and collects various types of welding data from the welding machine 200 for each weld created. Techniques for measuring, calculating, and collecting various types of welding data are well known in the art. Welding data may include data related to parameters of one or more of, for example, welding output voltage, welding output current, wire feed speed, arc length, stick out, contact tip-to-work distance (CTWD), work angle, travel angle, travel speed, gas flow rate, welding movements of the welding tool (torch), wire type, amount of wire used, and deposition rate. Such welding parameters are well known in the art.

The network interface 260 (e.g., an Ethernet interface in one embodiment) is configured to operatively interface with the computer 300 such that the welding machine 200 and the computer 300 can communicate with each other. In accordance with one embodiment, the network interface 260 is part of the controller 230. Communication between the welding machine 200 and the computer 300 may be used to allow an operator to control the welding machine 200. Communication between the welding machine 200 and the computer 300 may allow welding data to be provided from the welding machine 200 to a welding software program running on the computer 300, for example, to be displayed to the operator on the display monitor 320. Other types of communication between the welding machine 200 and the computer 300 are possible as well, in accordance with other embodiments.

The welding machine 200 includes a user interface 290 operatively connected to the controller 230. In accordance with one embodiment, the computer 300 is configured to receive commands from the welding machine 200 in response to a user using the user interface 290. For example, commands may be sent to the computer 300 to turn the air mouse device 450 "ON" or "OFF". For example, a user may use a touchscreen display (not shown) on the user interface 290 to turn the air mouse device 450 "ON". In one embodiment, an "ON" signal is sent from the user interface 290 to the controller 230. The controller 230 generates an "ON" command (e.g., in the form of digital data) in response to the "ON" signal and sends the "ON" command to the computer 300 via the network interface 260. Similarly, an "OFF" signal and an "OFF" command may be generated and sent to the computer 300 to turn the air mouse device 450 "OFF". The air mouse device 450 and the computer 300 are configured to wirelessly communicate with each other and, therefore, the computer 300 can communicate with the air mouse device 450, upon command, to activate (turn "ON") or deactivate (turn "OFF") the air mouse device 450.

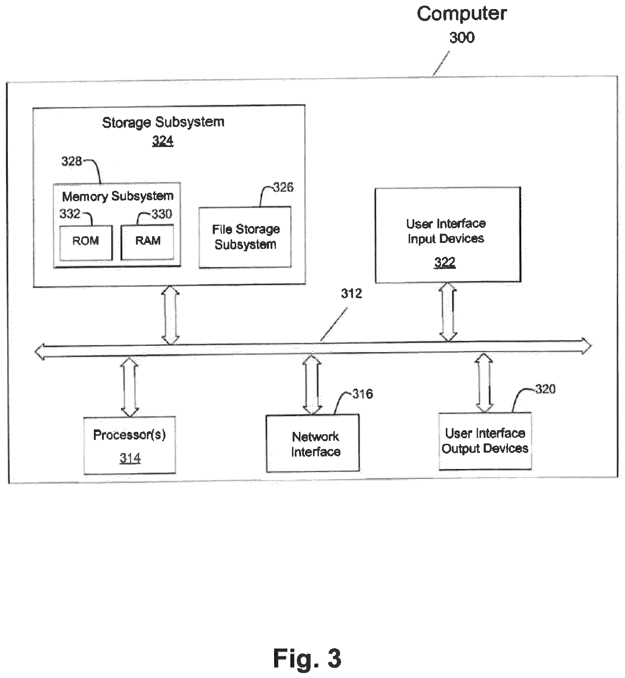

FIG. 3 illustrates one example embodiment of a computer 300 of the welding system 100 of FIG. 1. The computer 300 includes at least one processor 314 which communicates with a number of peripheral devices via bus subsystem 312. These peripheral devices may include a storage subsystem 324, including, for example, a memory subsystem 328 and a file storage subsystem 326, user interface input devices 322, user interface output devices 320 (e.g., a display monitor), and a network interface subsystem 316. The input and output devices allow user interaction with the computer 300. Network interface subsystem 316 provides an interface to outside networks (e.g., the Internet) and may be coupled to corresponding interface devices in other computer systems. For example, the controller 230 of the welding machine 200 may share one or more characteristics with the computer 300 and may be, for example, a conventional computer, a digital signal processor, and/or other computing device.

User interface input devices 322 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into the computer 300 or onto a communication network.

User interface output devices 320 may include a display subsystem (e.g., a display monitor), a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices (e.g., speakers). In general, use of the term "output device" is intended to include all possible types of devices and ways to output information from the computer 300 to the user or to another machine or computer system.

Storage subsystem 324 stores programming and data constructs that provide or support some or all of the functionality described herein (e.g., as software modules, components, or programs). For example, the storage subsystem 324 may include a management software program, a work instructions software program, work instructions, blueprints, welding procedure specifications, or a browser software application (e.g., a web browser).

Software modules/programs/applications are generally executed by processor 314 alone or in combination with other processors. Memory 328 used in the storage subsystem can include a number of memories including a main random access memory (RAM) 330 for storage of instructions and data during program execution and a read only memory (ROM) 332 in which fixed instructions are stored. A file storage subsystem 326 can provide persistent storage for program and data files, and may include a hard disk drive, a floppy disk drive along with associated removable media, a CD-ROM drive, an optical drive, or removable media cartridges (e.g., an external hard drive, a USB drive, or a security digital (SD) card for external storage). The modules implementing the functionality of certain embodiments may be stored by file storage subsystem 326 in the storage subsystem 324, or in other machines accessible by the processor(s) 314.

Bus subsystem 312 provides a mechanism for letting the various components and subsystems of the computer 300 communicate with each other as intended. Although bus subsystem 312 is shown schematically as a single bus, alternative embodiments of the bus subsystem may use multiple buses.

Due to the ever-changing nature of computing devices and networks, the description of the computer 300 depicted in FIG. 3 is intended only as a specific example for purposes of illustrating some embodiments. Many other configurations of the computer 300 are possible, having more or fewer components than the computer depicted in FIG. 3.

FIG. 4 illustrates a first example embodiment of the welding tool 400 of the welding system 100 of FIG. 1, having an embodiment of the air mouse device 450 that is integrated into the welding tool 400. The welding tool could be a GMAW gun, a FCAW gun, a SMAW electrode holder, a GTAW torch, etc., in accordance with various embodiments. The welding tool 400 includes a handle 410, a trigger assembly 420, a goose neck 430, a nozzle 440, and the air mouse device 450 integrated into the handle 410. The welding tool 400 also includes a conductive assembly 460 and a contact tip 470. The welding tool 400 is configured as an arc welding gun that has a welding wire fed there-through to perform a semi-automatic arc welding process. U.S. Published Patent Application No. 2010/0320184 A1 is incorporated herein by reference it its entirety and provides additional details of a welding tool in the form of a welding gun. The welding tool 400 is configured to be operatively connected to the welding machine 200 and used by the operator to perform a welding operation on the workpiece. The air mouse device 450 is configured to wirelessly communicate with the computer 300 which is also operatively connected to the welding machine 200.

The air mouse device 450 is a wireless air mouse device having three (3) selection interfaces 452, 454, and 456 (e.g., press buttons or touch pads) that are accessible to the operator at the handle 410. At least one of the selection interfaces allows the operator to select an option icon (e.g., 325, 326, 327, 328, or 329) on the display monitor 320 upon positioning the computer mouse 322 over the option icon. The air mouse device 450, integrated into the handle 410 of the welding tool 400, allows the operator to position the computer cursor 322 over an option icon, as displayed on the display monitor 320 by the computer 300, by moving the welding tool 400 in the air. The air mouse device 450 also allows the operator to select the option icon by engaging one of the selection interfaces (e.g., 452) of the air mouse device 450. The other selection interfaces (e.g., 454 and 456) may provide the selection of other functions, in accordance with other embodiments. For example, in one embodiment, the selection interface 454 allows the operator to effectively "right click" on an option icon to bring up a menu of selectable options (e.g. cut, copy, delete, rename, create shortcut, properties, etc.) for that option icon. In one embodiment, the selection interface 456 allows the operator to turn the air mouse device "ON" or "OFF" at the welding tool 400.

In one embodiment, the air mouse device 450 is configured as an inertially-based air mouse device. a calibration may be performed related to the direction the air mouse device gets pointed to move around. In another embodiment, the air mouse device 450 is configured as an optically-based air mouse device. Other types of air mouse devices may be possible as well, in accordance with other embodiments. In some embodiments, a calibration may be performed related to the direction the air mouse device gets pointed to move around. Details of various types of air mouse device technologies are described in U.S. Patent No. 4,787,051, U.S. Patent No. 9,547,379 B2, and U.S. Patent No. 9,766,721 B2 which are each incorporated herein by reference in their entirety.

FIG. 5 illustrates a second example embodiment of the welding tool 400 of the welding system 100 of FIG. 1. The embodiment of the welding tool 400 of FIG. 5 is similar to the embodiment of the welding tool 400 of FIG. 4 except that, in FIG. 5, the embodiment of the air mouse device 450 is attachable to and detachable from the welding tool 400, instead of being integrated into the welding tool 400 as in FIG. 4. Various embodiments of the air mouse device 450 of FIG. 5 may be attached, for example, to the handle 410, the neck 430, or at the interface between the handle 410 and the neck 430. The air mouse device 450 of FIG. 5 may be attached to the welding tool 400 via, for example, magnets, VELCRO®, clamps, adhesives, or other means, in accordance with various embodiments. In this manner, existing welding tools can be retrofitted with such attachable/detachable air mouse devices. Again, in some embodiments, a calibration may be performed related to the direction the air mouse device gets pointed to move around.

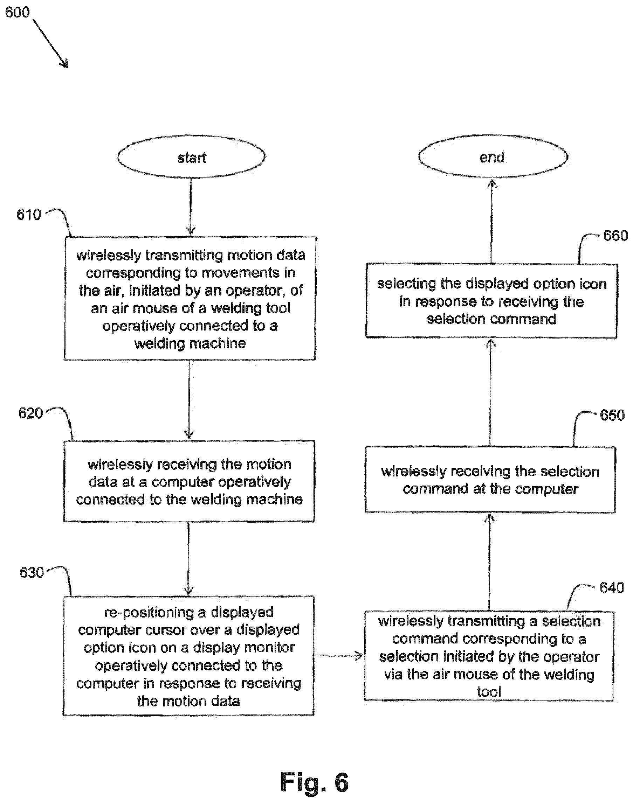

FIG. 6 is a flowchart of one embodiment of a method 600 to interact with a computer 300 during a welding operation using the welding system 100 of FIG. 1. At block 610, motion data (corresponding to movements in the air of a welding tool 400 initiated by an operator) is wirelessly transmitted by an air mouse device 450 of the welding tool 400, while the welding tool 400 is operatively connected to a welding machine 200. At block 620, the motion data is wirelessly received at a computer 300 operatively connected to the welding machine 200.

At block 630, a displayed computer cursor 322 is re-positioned by the computer 300 over a displayed option icon (e.g., 325) on a display monitor 320 operatively connected to the computer 300, in response to receiving the motion data. At block 640, a selection command is wirelessly transmitted by the air mouse device 450 in response to a selection initiated by the operator via a selection interface (e.g., 452) of the air mouse device 450 of the welding tool 400. At block 650, the selection command is wirelessly received at the computer 300.

At block 660, the displayed option icon is selected by the computer 300 in response to the computer 300 receiving the selection command. Again, in general, selection of an option icon results in the computer 300 initiating at least one function associated with the option icon (e.g., opening a computer folder, opening a computer file, initiating execution of a computer program, or any number of other operator selectable computer or software related functions). In this manner, a welding tool, operatively connected to a welding machine, can be used to interact with a computer, also operatively connected to the welding machine.

FIG. 7 illustrates one embodiment of a networked system architecture 700 having a plurality of welding systems 100 (see FIG. 1) each configured to access information via an external computer network 710 (e.g., the Internet). For example, in one embodiment of the system architecture 700 of Fig. 7, each welding system 100 includes a computer 300 configured to access information via the external computer network 710. The computer 300 facilitates accessing of the external computer network 710 via the network interface 316 (see FIG. 3) and a browser software application (e.g., a web browser) running on the computer 300. A display monitor 320 is operatively connected to the computer 300 (or is considered to be part of the computer 300) and is configured to display a browser screen generated by the browser software application executed by the computer 300.

A welding tool 400 of the welding system 100 (see FIG. 1, FIG. 4, and FIG. 5) is configured to be used by an operator to perform a welding operation on a workpiece. The welding tool 400 has an air mouse device 450 configured to wirelessly communicate with the computer 300 to allow the operator to position a computer cursor 322 (see FIG. 1), displayed on the display monitor 320 by the computer 300, by moving the welding tool 400 in the air. For example, the air mouse device 450 is configured to allow the operator to manipulate the browser screen to access information via the external computer network 710 by positioning the computer cursor 322 over any of first option icons, displayed as part of the browser screen on the display monitor 320, and selecting any of the first option icons. As an example, a first option icon may include a window 329 (see FIG. 1) that allows the operator to type in text (e.g., selected from a text menu of other first option icons) corresponding to a Uniform Resource Locator (URL) or search criteria, for example.

Referring again to FIG. 7, information accessible via the external computer network 710 may be accessed from, for example, a server computer 720 operatively connected to a data store 730 (e.g., "in the cloud"). The information accessible via the external computer network 710 from the server computer 720 may include, for example, web pages, welding work instructions, welding blueprints, welding procedure specifications, or software applications stored in the data store 730, for example. Access of other information is possible as well, in accordance with other embodiments.

As an example, in one embodiment, the display monitor 320 is configured to display a web page accessed by the computer 300 via the external computer network 710. The air mouse device 450 allows the operator to position the computer cursor 322 over second option icons, displayed as part of the web page on the display monitor 320, and select the second option icons. Selections of the second option icons using the air mouse device 450 of the welding tool 400 allow the operator to interact with the web page.

Furthermore, various software applications accessible via the external computer network 710 may include, for example, a welding software application, a commercially available computer-aided design (CAD) software application, a commercially available spreadsheet software application, or a commercially available presentation software application. In accordance with various embodiments, such software applications are configured to execute on the server computer 720 and generate screens that can be viewed and manipulated by the operator on the display monitor 320 of the computer 300 (via the external computer network 710) using the air mouse device 450 of the welding tool 400.

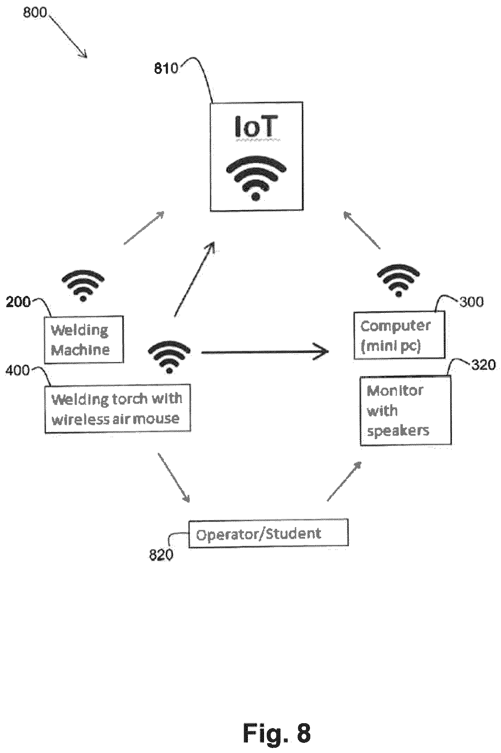

FIG. 8 illustrates one embodiment of a networked system architecture 800 having a welding system configured to interact with the Internet-of-Things (IoT) 810. The welding system of FIG. 8 includes a welding machine 200, a computer 300, a display monitor 320 (e.g., with speakers) and a welding torch 400 having a wireless air mouse device 450. As used herein, the term IoT refers to the interconnection, via the Internet, of computing devices embedded in objects in a manufacturing or training environment, enabling the embedded computing devices to send and receive data (e.g., wirelessly). In such a networked system architecture 800, the computer 300 is configured to interact with the IoT, for example, in a similar manner to how the computer 300 interacts with the external computer network 710 in FIG. 7 (but, for example, in a wireless manner). The welding torch 400 in FIG. 8 is used by an operator or a student 820 to move a computer cursor on the display monitor 320 and select option icons as previously described herein. The welding machine 200 in FIG. 8 is configured to communicate with the computer 300 as described previously herein (but, for example, in a wireless manner). As a result, in the system architecture 800 of FIG. 8, the welding torch 400 with the wireless air mouse 450 can be used to interact with many devices and objects in, for example, a manufacturing environment or a training environment.

While the disclosed embodiments have been illustrated and described in considerable detail, it is not the intention to restrict or in any way limit the scope of the appended claims to such detail. It is, of course, not possible to describe every conceivable combination of components or methodologies for purposes of describing the various aspects of the subject matter. Therefore, the disclosure is not limited to the specific details or illustrative examples shown and described. Thus, this disclosure is intended to embrace alterations, modifications, and variations that fall within the scope of the appended claims, which satisfy the statutory subject matter requirements of 35 U.S.C. §101. The above description of specific embodiments has been given by way of example. From the disclosure given, those skilled in the art will not only understand the general inventive concepts and attendant advantages, but will also find apparent various changes and modifications to the structures and methods disclosed. It is sought, therefore, to cover all such changes and modifications as fall within the spirit and scope of the general inventive concepts, as defined by the appended claims, and equivalents thereof.

**REFERENCE NUMERAL**

| | | | |
|---|---|---|---|
| 100 | welding system | 327 | option icon |
| 200 | welding machine | 328 | option icon/memory subsystem |
| 205 | switching power supply | 329 | option icon/window |
| 210 | power conversion circuit | 330 | random access memory (RAM) |
| 220 | waveform generator | 332 | read only memory (ROM) |
| 230 | controller | 400 | welding tool |
| 250 | feedback circuit | 410 | handle |
| 260 | network interface | 420 | trigger assembly |
| 270 | wire feeder | 430 | goose neck |
| 272 | switching electrode/wire | 440 | nozzle |
| 274 | workpiece part | 450 | mouse device |
| 280 | switching circuit | 452 | press button/touch pad/selection interface |
| 290 | user interface | | |
| 300 | computer | 454 | press button/touch pad |
| 312 | bus subsystem | 456 | press button/touch pad |
| 314 | processor | 460 | conductive assembly |
| 316 | interface subsystem/network interface | 470 | contact tip |
| | | 600 | method |
| 320 | display monitor/output device | 610 | block |
| 322 | computer cursor/input device | 620 | block |
| 324 | storage subsystem | 640 | block |
| 325 | option icon | 650 | block |
| 326 | option icon/storage subsystem | 660 | block |
| | | 700 | system architecture |
| 710 | computer network | CRT | cathode ray tube |
| 720 | server computer | CTWD | tip-to-work distance |
| 730 | data store | RAM | random access memory |
| 800 | system architecture | ROM | read only memory |
| 810 | Internet-of-Things (ioT) | WFS | wire feed speed |
| 820 | operator/student | | |

## Claims

1. A welding tool (400) comprising:
a handle (410);
a neck (430); and
an air mouse device (450) having a selection interface,
wherein the welding tool is configured to be operatively connected to a welding machine (200) and used by an operator to perform a welding operation on a workpiece, and
wherein the air mouse device (450) is configured to wirelessly communicate with a computer operatively connected to the welding machine (200) to:
allow the operator to position a computer cursor over an option icon (325), as displayed on a display monitor (320) by the computer (300), by moving the welding tool (400) in the air, and
allow the operator to select the option icon (325) by engaging the selection interface of the air mouse device (450).

2. The welding tool (400) of claim 1, wherein the welding tool (400) is an arc welding tool further comprising:
a trigger assembly (420);
a nozzle (440);
a conductive assembly; and
a contact tip (470).

3. A welding system (100) comprising:
a welding machine (200) configured to provide a welding output power during a welding operation;
a computer (300) operatively connected to the welding machine (200) to communicate with the welding machine (200), wherein the computer (300) is configured to execute a welding software program;
a display monitor (320) operatively connected to the computer (300) and configured to display a screen generated by the welding software program when executed by the computer (300); and
a welding tool (400) operatively connected to the welding machine (200) and configured to be used by an operator to perform the welding operation on a workpiece,
wherein the welding tool (400) has an air mouse device (450) configured to wirelessly communicate with the computer (300) to allow the operator to position a computer cursor, displayed on the display monitor (320) by the computer (300), by moving the welding tool (400) in the air, and
wherein the air mouse device (450) is configured to allow the operator to position the computer cursor over option icons (325), displayed as part of the screen on the display monitor (320), and select the option icons (325).

4. The welding system of claim 3, wherein the welding machine (200) includes a user interface, and wherein the computer (300) is configured to receive commands from the welding machine (200), in response to a user using the interface, to turn the air mouse device (450) on or off.

5. The welding system (100) of claim 3 or 4, wherein the welding software program is a management software program configured to allow the operator to control the welding machine (200) using the air mouse device (450).

6. The welding system (100) of any of the claims 3 to 5, wherein the welding software program is a work instructions software program configured to guide the operator through the welding operation.

7. The welding system (100) of any of the claims 3 to 6, wherein the welding software program allows the operator to access at least one of work instructions, blueprints, or welding procedure specifications via the computer (300) using the air mouse device (450).

8. A welding system (100) comprising:
a welding machine (200) configured to provide a welding output power during a welding operation;
a computer (300) operatively connected to the welding machine (200) to communicate with the welding machine (200), wherein the computer (300) is configured to access an external computer network (710) via a browser software application running on the computer (300);
a display monitor (320) operatively connected to the computer (300) and configured to display a browser screen generated by the browser software application when executed by the computer (300); and
a welding tool (400) operatively connected to the welding machine (200) and configured to be used by an operator to perform the welding operation on a workpiece,
wherein the welding tool (400) has an air mouse device (450) configured to wirelessly communicate with the computer (300) to allow the operator to position a computer cursor, displayed on the display monitor (320) by the computer (300), by moving the welding tool (400) in the air, and
wherein the air mouse device (450) is configured to allow the operator to manipulate the browser screen to access information from the external computer network (710) by positioning the computer cursor over first option icons (325), displayed as part of the browser screen on the display monitor (320), and select the first option icons (325).

9. The welding system (100) of claim 8, wherein the display monitor (320) is configured to display a web page accessed by the computer (300) as the information from the external computer network (710), and wherein the air mouse (450) device is configured to allow the operator to position the computer cursor over second option icons (325), displayed as part of the web page on the display monitor (320), and select the second option icons (325).

10. The welding tool (400) or system (100) of any of the claims 1 to 9, wherein the air mouse device (450) in an integral part of the welding tool (400).

11. The welding tool (400) or system (100) of any of the claims 1 to 10, wherein the air mouse device is configured to be attachable to and detachable from at least one of the handle or the neck of the welding tool or from the welding tool.

12. The welding tool (400) or system (100) of any of the claims 1 to 11, wherein the air mouse device (450) is configured as an inertially-based air mouse device (450).

13. The welding tool (400) or system (100) of any of the claims 1 to 12, wherein the air mouse device (450) is configured as an optically-based air mouse device (450).

14. The welding system (100) of any of the claims 8 to 13, wherein the information accessible from the external computer network (710) includes at least one of welding work instructions, welding blueprints, welding procedure specifications, or a software application.

15. The welding system (100) of claim 14, wherein the software application includes at least one of a welding software application, a commercially available computer-aided design (CAD) software application, a commercially available spreadsheet software application, or a commercially available presentation software application configured to execute on the external computer network (710).
